# EUROPÄISCHE PATENTSCHRIFT

(11) **EP 2 462 543 B1**
(45) Veröffentlichungstag und Bekanntmachung des Hinweises auf die Patenterteilung: **01.03.2017**
(21) Anmeldenummer: 10737915.8
(22) Anmeldetag: 02.08.2010
(51) Int. Cl.: G06K 19/077, G06K 17/00

(54) **PERSONALISIERUNG KARTENFÖRMIGER DATENTRÄGER**
PERSONALIZING CARD-SHAPED DATA CARRIERS
PERSONNALISATION DE SUPPORTS DE DONNÉES EN FORME DE CARTE

(30) Priorität: 03.08.2009 DE 102009035939
(43) Veröffentlichungstag der Anmeldung: 13.06.2012
(73) Patentinhaber: Giesecke & Devrient GmbH, 81677 München (DE)
(72) Erfinder: GÖTZ, Thomas, 85570 Markt Schwaben (DE); SCHNEIDER, Thomas, 81379 München (DE); PERLITZ, Lucas, 80339 München (DE)
(86) Internationale Anmeldenummer: PCT/EP2010/061184
(87) Internationale Veröffentlichungsnummer: WO 2011/015546

(56) Entgegenhaltungen:
- EP-A1- 1 420 361
- EP-A1- 1 698 999
- DE-A1-102005 035 848
- US-A1- 2004 112 951

## Beschreibung

Die vorliegende Erfindung betrifft ein Verfahren und eine Vorrichtung zur Personalisierung kartenförmiger Datenträger, insbesondere Chipkarten.

Kartenförmige Datenträger im Sinne der vorliegenden Erfindung sind beispielsweise Chipkarten im ID1-Format, aber auch in anderen Formaten wie ID000 bis ID3 einschließlich Zwischenformaten oder in anderen geeigneten Formaten, sowie im Mini-UICC-Format, beispielsweise SIM-Karten oder Plug-Ins, und andere kartenförmige Datenträger, auf denen Daten digital auf einer Speichereinrichtung gespeichert werden können.

Eine Personalisierung kann sowohl die elektronische als auch die optische Personalisierung von kartenförmigen Datenträgern umfassen, wobei sich die vorliegende Erfindung in erster Linie mit der elektronischen Personalisierung befasst. Unter Personalisierung werden dabei alle Vorgänge verstanden, die angewandt werden, um eine Vielzahl von Datenträgern, welche zunächst gleiche elektronische und/ oder optische Eigenschaften aufweisen, zu individualisieren. Bei der elektronischen Personalisierung werden auf eine elektronische Speichereinrichtung eines kartenförmigen Datenträgers individuelle Daten, nachfolgend als Personalisierungsdaten bezeichnet, übertragen. Zusätzlich oder alternativ können kartenförmige Datenträger einer optischen Personalisierung unterzogen werden, indem visuell erkennbare Personalisierungsinformationen auf die Datenträger aufgebracht, beispielsweise mittels eines Lasers eingebracht oder mittels Druckverfahren aufgedruckt werden. Die optischen Personalisierungsinformationen können mit dem menschlichen Auge wahrgenommen und geprüft werden, wohingegen die elektronischen Personalisierungsdaten von entsprechenden Lesegeräten aus der Speichereinrichtung ausgelesen werden.

Vor der Personalisierung werden die kartenförmigen Datenträger üblicherweise zunächst in ihrer finalen Form hergestellt. Anschließend an die Fertigstellung des Körpers der kartenförmigen Datenträger erfolgt eine sequentielle Personalisierung der Datenträger, das heißt die kartenförmigen Datenträger werden als einzelne Objekte nacheinander einer Vorrichtung zur Personalisierung zugeführt. Jeder Datenträger wird dabei einzeln in der Vorrichtung transportiert und ausgerichtet, um die entsprechenden Personalisierungsdaten auf jeden Datenträger zu übertragen. Nach dem Übertragen der Personalisierungsdaten werden die einzelnen Datenträger erneut zu Stapeln zusammengefasst.

Die DE 10 2006 020 227 A1 beschreibt ein solches Verfahren zur Personalisierung elektronischer Datenträger mittels eines Personalisierungsautomats, wobei die elektronischen Datenträger zur Personalisierung mittels Werkstückträgern einzeln transportiert werden. Die Werkstückträger umfassen eine intelligente Steuerung, so dass die Personalisierung der Datenträger von den Werkstückträgern autonom durchgeführt werden kann. Dazu werden Personalisierungsdaten von einem zentralen Verwaltungssystem angefordert und über entsprechende Schnittstellen an einen Werkstückträger und an einen in diesem Werkstückträger befindlichen Datenträger übertragen. Das Übertragen der Personalisierungsdaten erfolgt während des Transports mittels der Werkstückträger.

Die WO 01/41087 A1 beschreibt ebenfalls ein Verfahren zur Personalisierung von kartenförmigen Datenträgern, wobei die Personalisierungsdaten von einem Host-Computer zunächst an ein Initialisierungs- und/oder Personalisierungssystem übertragen und zwischengespeichert werden. Des Weiteren können Initialisierungsdaten, welche für eine Vielzahl von Datenträgern identisch sind, ebenfalls dort zwischengespeichert werden. Die zwischengespeicherten Daten werden dann von dem Personalisierungssystem auf die entsprechenden Datenträger übertragen. Durch das Zwischenspeichern wird der Datenverkehr mit dem Host-Computer reduziert.

In der DE 603 20 377 T2 werden ein Kartenpersonalisierungssystem und ein entsprechendes Verfahren beschrieben. Die zu personalisierenden Datenträger werden einzeln oder in einem Stapel gebündelt in einen Eingabetrichter einer Personalisierungsvorrichtung eingegeben. Von dort durchläuft jeder Datenträger einzeln verschiedene Verarbeitungsmodule, wie ein Magnetstreifenmodul, Lasermodul, Graphikmodul oder Prägemodul, welche zum elektronischen und/ oder optischen Personalisieren der Datenträger vorgesehen sind. Nach der Bearbeitung werden die Datenträger in einem Ausgabetrichter gesammelt, so dass sie von einem Bearbeiter entnommen werden können.

In den bekannten Verfahren zur Personalisierung von kartenförmigen Datenträgern ist der Prozess der Personalisierung in seiner Verarbeitungsgeschwindigkeit beschränkt, beispielsweise auf circa 1.500 bis 5.000 Einheiten pro Stunde. Ferner kann es bei der Handhabung der Datenträger zu optischen Defekten der Oberflächen der Datenträger kommen. Außerdem sind die Personalisierungsvorrichtungen nur für die Handhabung bestimmter Datenträgerformate eingerichtet.

US2004/0112951 A1 beschreibt eine Bearbeitung eines integrierten Schaltkreises, wobei dieses Bearbeiten jede beliebige Kommunikation mit dem Schaltkreis umfassen kann, beispielsweise das Bereitstellen von Informationen, das Lesen von Informationen, das Programmieren, etc.

Aufgabe der vorliegenden Erfindung ist es daher, die Personalisierung kartenförmiger Datenträger zu verbessern, insbesondere zu beschleunigen, und auch die Flexibilität bei der Personalisierung kartenförmiger Datenträger unterschiedlicher Formate zu verbessern.

Die Aufgabe wird gelöst durch ein Verfahren und eine Vorrichtung zur Personalisierung kartenförmiger Datenträger gemäß den unabhängigen Ansprüchen. Weiterbildungen und bevorzugte Ausgestaltungen sind in davon abhängigen Ansprüchen angegeben.

Erfindungsgemäß erfolgt das Transportieren der kartenförmigen Datenträger mittels eines band- oder schlauchförmigen Trägers als Transportmedium. Auf dem band- oder schlauchförmigen Träger ist eine Vielzahl von zu personalisierenden, kartenförmigen Datenträgern in Transportrichtung hintereinander angeordnet.

Da der Transport der Datenträger beim Übertragen der Personalisierungsdaten auf dem band- oder schlauchförmigen Träger erfolgt, ist eine kontinuierliche Bearbeitung der kartenförmigen Datenträger möglich. Die zu personalisierenden kartenförmigen Datenträger müssen nicht einzeln gehandhabt werden, so dass eine deutlich höhere Verarbeitungsgeschwindigkeit erreicht werden kann. Auch ist aufgrund dieser Art der Handhabung die Gefahr der Verursachung optischer Defekte an den Datenträgeroberflächen reduziert, insbesondere im Falle eines schlauchförmigen Trägers, bei dem die Datenträger im Schlauch vollständig oder teilweise aufgenommen sind. Auf diese Weise können auch erhebliche Kosten bei der Personalisierung von kartenförmigen Datenträgern eingespart werden. Denn dadurch, dass die Zuführung der kartenförmigen Datenträger auf dem bandförmigen Träger erfolgt und die Vorrichtung zur Personalisierung deshalb nicht in hohem Maße auf einen speziellen Formfaktor spezialisiert sein muss, können mit derselben Vorrichtung wesentlich flexibler unterschiedliche Formfaktoren personalisiert werden.

Unter einem band- oder schlauchförmigen Träger wird in diesem Zusammenhang ein Träger verstanden, der in seiner Länge eine wesentlich größere Abmessung aufweist als in seiner Breite und somit eine Vielzahl, beispielsweise mehr als 50,100,500 oder 1000, hintereinander angeordneter kartenförmiger Datenträger aufnehmen kann. Ein solcher Träger wird auch als Endlosträger bezeichnet, wobei ein Fachmann unter einem Endlosträger einen quasi-endlosen Träger versteht, der zwar einen Anfang und ein Ende aufweist, jedoch aufgrund seiner Länge als endlos angesehen wird. Solche Endlosträger können auf einer Rolle bereitgestellt werden, von welcher sie abgewickelt und dem Prozess zugeführt werden.

Der Endlosträger kann bereits bei der Herstellung der Körper der kartenförmigen Datenträger, beispielsweise bei der Laminierung der unterschiedlichen Schichten eines Datenträgers, entstehen. In diesem Fall bilden die kartenförmigen Datenträger einen Teil des Endlosträgers. Gegebenenfalls kann eine Perforation des Endlosträgers zwischen den einzelnen Datenträgern vorgesehen werden. Die kartenförmigen Datenträger können aber auch zunächst in herkömmlicher Weise fertig produziert und dann separat hintereinander auf den Endlosträger aufgebracht werden. Denkbar ist auch eine Anordnung mehrerer Reihen von in Transportrichtung hintereinander angeordneten kartenförmigen Datenträgern nebeneinander auf dem Endlosträger.

Zur Übertragung der Personalisierungsdaten auf die elektronische Speichereinrichtung eines kartenförmigen Datenträgers weist die Personalisierungseinrichtung Schnittstellen auf, über welche mit den kartenförmigen Datenträgern eine kontaktgebundene oder kontaktlose Kommunikation möglich ist. Um eine kontinuierliche Verarbeitung zu gewährleisten, bewegt sich die Schnittstelle mit der gleichen Geschwindigkeit wie der transportierte kartenförmige Datenträger. Die Personalisierung findet somit während der Transportbewegung des kartenförmigen Datenträgers statt, ohne dass der Prozess angehalten werden muss. Auf diese Weise kann eine hohe Verarbeitungsgeschwindigkeit erzielt werden.

Vorteilhaft bewegt sich die Schnittstelle in einer Endlosschleife, beispielsweise an einer Kette, in der Personalisierungseinrichtung. Der Endlosträger mit den zu personalisierenden datenförmigen Datenträgern wird an der Endlosschleife entlang geführt, insbesondere um die Endlosschleife herumgeführt. Die Schnittstellen können sich beispielsweise entlang des Umfangs der Personalisierungseinrichtung bewegen. Sie stehen mit den kartenförmigen Datenträgern solange kontaktgebunden oder kontaktlos in Kommunikationsverbindung, wie diese entlang der Personalisierungseinrichtung geführt werden. Während dieser Dauer können die Personalisierungsdaten vollständig an die kartenförmigen Datenträger übertragen werden.

Vorteilhaft erfolgt das Übertragen der Personalisierungsdaten auf mehrere kartenförmige Datenträger zumindest teilweise gleichzeitig. Insbesondere erfolgt die gleichzeitige Übertragung der Personalisierungsdaten auf diejenigen Datenträger zumindest teilweise gleichzeitig, welche auf dem Endlosträger in Transportrichtung hintereinander angeordnet sind. Für mehrere benachbarte Datenträger kann die Übertragung der Personalisierungsdaten dabei vollständig simultan erfolgen. Beginnt die Übertragung der Personalisierungsdaten auf die entsprechenden kartenförmigen Datenträger jedoch entsprechend ihrer Kontaktierungsreihenfolge mit den Schnittstellen der Personalisierungseinrichtung, ist die Übertragung der Personalisierungsdaten auf denjenigen Datenträger zuerst abgeschlossen, welcher von der entsprechenden Schnittstelle zuerst kontaktiert wurde. Die Übertragung der Personalisierungsdaten auf die auf diesen Datenträger folgenden Datenträger erfolgt dann zeitversetzt entsprechend des Beginns ihrer jeweiligen Kontaktierung mit der Schnittstelle der Personalisierungseinrichtung. Die Übertragung der Personalisierungsdaten auf die in Transportrichtung hintereinander angeordneten kartenförmigen Datenträger überschneidet sich somit zeitlich.

Die Schnittstellen der Personalisierungseinrichtung sind mit einer Anschlusseinrichtung verbunden, welche die Personalisierungsdaten von einer Datenquelle bezieht. Um eine kontinuierliche schleifenförmige Bewegung der Schnittstellen zu ermöglichen, sind die Schnittstellen vorteilhaft über Schleifkontakte mit der Anschlusseinrichtung verbunden. Die Schnittstellen können auch mit der Anschlusseinrichtung fest verbunden sein, wobei in diesem Fall die Anschlusseinrichtung in Bewegungsrichtung der Schnittstellen mitdreht. Die Anschlusseinrichtung bezieht die Personalisierungsdaten von der Datenquelle dann kontaktlos über eine Kontaktlosschnittstelle, z.B. über einen Optokoppler.

Falls ein kartenförmiger Datenträger beispielsweise von der Personalisierungseinrichtung als defekt erkannt wird, wird dieser vorteilhaft ausgesondert oder durch einen funktionsfähigen Datenträger ersetzt. Zu diesem Zweck ist in Transportrichtung nach der Personalisierungseinrichtung eine Einrichtung zur Nachproduktion fehlerhafter Datenträger angeordnet. Diese trennt einen als fehlerhaft erkannten Datenträger aus dem Endlosträger heraus und ersetzt den jeweils herausgetrennten Datenträger durch einen Datenträger, auf welchen die entsprechenden Personalisierungsdaten korrekt übertragen worden sind. Diese Übertragung der Personalisierungsdaten kann in der Einrichtung zur Nachproduktion erfolgen, in welcher auch ein Vorrat von kartenförmigen Datenträgern als Ersatz bereitgestellt werden kann. Ferner kann die Einrichtung zur Nachproduktion eine Sammeleinrichtung für die herausgetrennten, fehlerhaften Datenträger aufweisen.

Vorteilhaft kann zusätzlich zu der eben beschriebenen elektronischen Personalisierung auch eine optische Personalisierung der kartenförmigen Datenträger vorgenommen werden. Dies erfolgt durch Aufbringen von visuell erkennbaren Personalisierungsinformationen auf die Datenträger. Das Aufbringen der Personalisierungsinformationen kann beispielsweise mittels eines Lasers oder durch Aufdrucken erfolgen.

Vorteilhaft werden die auf den kartenförmigen Datenträger übertragenen Personalisierungsdaten mit den auf den Datenträger aufgebrachten, visuell erkennbaren Personalisierungsinformationen auf Übereinstimmungen verglichen. Dies kann in einer Einrichtung zur Prüfung der Plausibilität der Personalisierung erfolgen, welche analog zur Personalisierungseinrichtung aufgebaut sein kann. Insbesondere erfolgt das Auslesen zum Zwecke der Prüfung auf Plausibilität während der Transportbewegung beim Vorbeiführen des Endlosträgers an der Prüfeinrichtung. Der Prozess braucht somit auch zur Prüfung der Plausibilität der Personalisierung nicht angehalten zu werden.

Die Erfindung wird im Folgenden beispielhaft anhand der begleitenden Zeichnungen beschrieben. Darin zeigen:
- Figur 1: einen kartenförmigen Datenträger schematisch in Aufsicht,
- Figuren 2a bis 3b: unterschiedliche Ausgestaltungen bandförmiger Endlosträger mit darauf angeordneten kartenförmigen Datenträgern,
- Figur 4: eine schematische Darstellung einer Vorrichtung zur Personalisierung kartenförmiger Datenträger,
- Figur 5: eine schematische Darstellung einer Personalisierungseinrichtung der Vorrichtung aus Figur 4 gemäß einer ersten Variante,
- Figur 6: eine zweite Variante der Personalisierungseinrichtung und
- Figur 7: eine schematische Darstellung einer Einrichtung zur Nachproduktion fehlerhafter Datenträger.

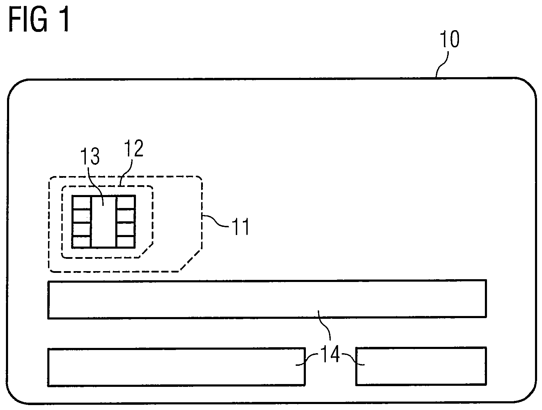

In Figur 1 ist ein zu personalisierender, kartenförmiger Datenträger 10 in Form einer Chipkarte im ID1-Format dargestellt. Der Datenträger 10 weist eine Speichereinrichtung 13 in Form eines Chips mit entsprechenden Kontaktflächen auf, auf welchem elektronische Personalisierungsdaten gespeichert werden können. Ferner sind auf dem Datenträger 10 Bereiche 14 vorgesehen, welche visuell erkennbare Personalisierungsinformationen, beispielsweise den Namen des Karteninhabers, die Kartennummer oder andere Individualdaten, aufweisen können. Zusätzlich können auf der Oberfläche des Datenträgers 10, das heißt auf der Vorder- und/ oder Rückseite des Datenträgers 10, weitere, beliebige Personalisierungsinformationen, wie ein Foto des Karteninhabers, Logos und dergleichen, aufgebracht werden, beispielsweise aufgedruckt werden.

In Figur 1 sind darüber hinaus weitere kartenförmige Datenträger im ID000-Format 11 und im Mini-UICC-Format 12 strichliniert angedeutet. Diese kleinformatigen Datenträger 11,12 weisen ebenfalls den Chip 13 mit Kontaktflächen auf, auf den die Personalisierungsdaten übertragen und gespeichert werden. Auf die Oberfläche der kleinformatigen Datenträger 11,12 können ebenfalls visuell wahrnehmbare Personalisierungsinformationen aufgebracht werden.

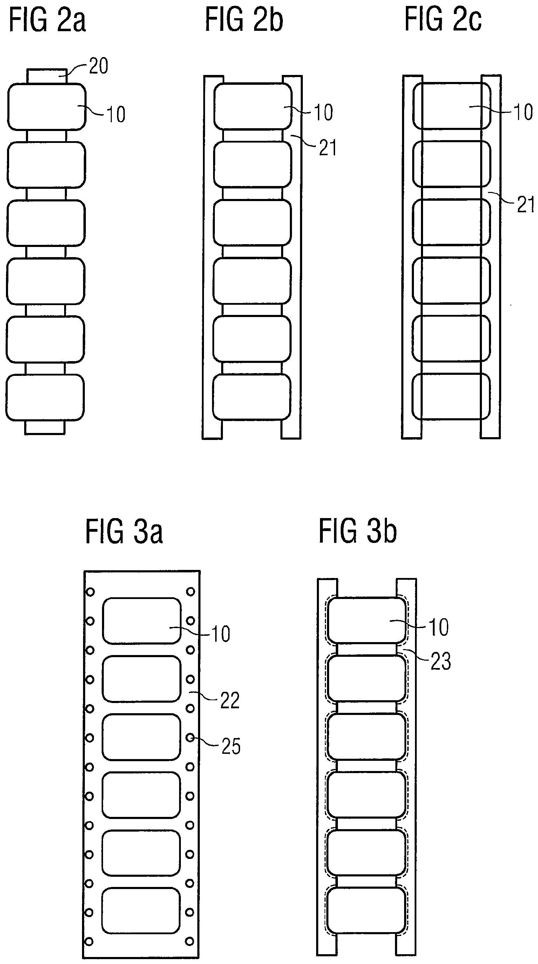

In Figur 2a ist ein Endlosträger in Form eines Trägerbandes 20 dargestellt, auf welchem kartenförmige Datenträger 10 hintereinander angeordnet sind. Das Trägerband 20 weist eine geringere Breite als die Datenträger 10 auf. Die Datenträger 10 sind in diesem Ausführungsbeispiel auf dem Trägerband 20 befestigt, beispielsweise aufgeklebt, um die Datenträger 10 dem Personalisierungsprozess kontinuierlich zuführen zu können.

Figur 2b zeigt ein weiteres Ausführungsbeispiel eines Trägerbands 21, auf welchem Datenträger 10 hintereinander angeordnet sind. Die Datenträger 10 sind beidseitig an ihren Rändern mit dem Trägerband 21 verbunden. Das Trägerband 21 ist nur an den Rändern der Datenträger 10, eventuell mit Zwischenstegen im Bereich der Datenträger 10, ausgebildet, so dass Material eingespart werden kann. Die Datenträger 10 können beispielsweise wiederum auf dem Trägerband 21 aufgeklebt sein. In Figur 2c ist das Trägerband 21 mit darauf angeordneten Datenträgern 10 dargestellt, wobei hier die Datenträger 10 seitlich mit dem Trägerband 21 verschweißt sind.

In Figur 3a ist noch ein weiteres Ausführungsbeispiel eines Trägerbands 22 dargestellt. Hier sind die Datenträger 10 Teil des Trägerbands 22, welches für den exakten Transport eine Lochung 25 an beiden Rändern aufweist. Das Trägerband 22 mit den integrierten kartenförmigen Datenträgern 10 kann unmittelbar aus der Produktion der kartenförmigen Datenträger, beispielsweise einer Laminierung der Schichten der kartenförmigen Datenträger, stammen.

Figur 3b zeigt ein Trägerband 23, bei welchem die Datenträger 10 ebenfalls Bestandteil des Trägerbands 23 sind. Allerdings ist hier das Trägerband 23 nicht vollflächig, sondern nur an den Seiten der Datenträger 10 ausgebildet. Das Trägerband 23 weist in diesem Fall keine Index- oder Transportlochung auf. Diese Lochung kann jedoch bei allen Ausführungsbeispielen der Trägerbänder 20, 21, 22, 23 vorgesehen sein. Auch können die Trägerbänder 20, 21, 22,23 kartenförmige Datenträger unterschiedlichen Formats tragen, z.B. Mini-UICC, Karten im Format von ID000 bis ID3, einschließlich Zwischengrößen, oder anderen geeigneten größeren oder kleineren Formaten. Somit können sich auf einem Trägerband 20, 21, 22, 23 unterschiedliche Kartenformate befinden. Ferner ist es möglich, daß auf dem Trägerband 20, 21, 22, 23 mindestens ein Datenträger 10 durch z.B. eine Perforation mit mindestens einem weiteren Datenträger zu einem Los verbunden ist, welcher z.B. für Werbezwecke dient, wie dies von sogenannten Gift-Cards bekannt ist, wobei der weitere Datenträger personalisiert oder nicht personalisiert sein kann. Der mindestens eine weitere Datenträger kann an der Schmal- und/oder Längsseite des Datenträgers 10 angeordnet sein.

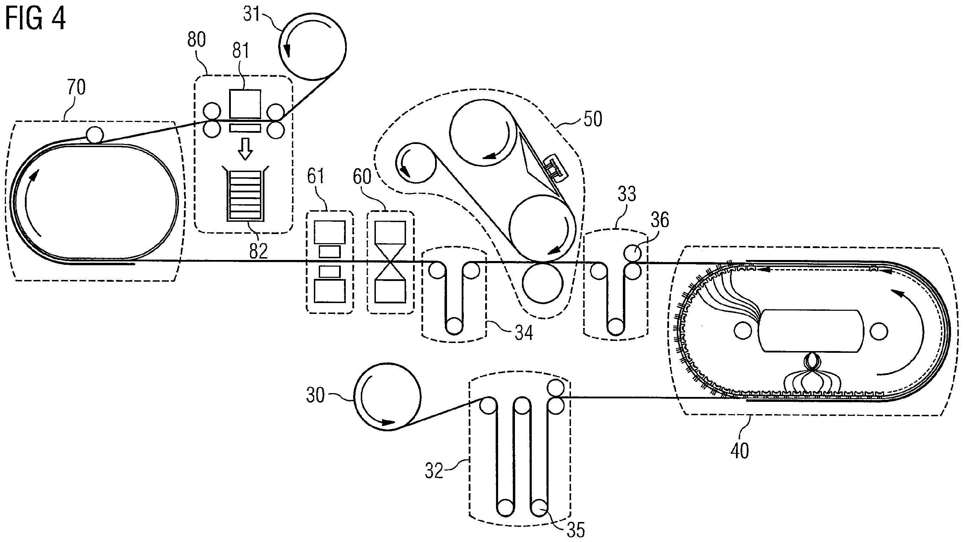

In Figur 4 ist eine Vorrichtung zur Personalisierung kartenförmiger Datenträger schematisch dargestellt. Die zu personalisierenden, kartenförmigen Datenträger werden auf einem der beschriebenen Trägerbänder 20, 21, 22, 23 oder einem beliebigen Endlosträger als Trägermedium auf einer Rolle 30 bereitgestellt. Bei der Materialzuführung über die Rolle 30 kann eine Eingangszählung der kartenförmigen Datenträger erfolgen. Insbesondere kann eine Gut- oder Schlechtteilzählung erfolgen, welche unter anderem auf einer während vorangegangener Prozesse durchgeführten Markierung beispielsweise der Schlechtteile basieren kann. Bei der Produktion der Körper der Datenträger kann beispielsweise eine Schlechtteil-Stanzung erfolgt sein, d.h. bereits bei der Produktion als fehlerhaft erkannte Datenträger können beispielsweise mittels einer Stanzung in einer bestimmten Form markiert oder schon vollständig entfernt worden sein.

Der von der Rolle 30 bereitgestellte Endlosträger wird nach dem Abrollen einer Tänzersteuerung 32 zugeführt. Diese Tänzersteuerung 32 weist teilweise verlagerbare Rollen 35 auf, über welche der Endlosträger geführt wird. Über die Tänzersteuerung 32 kann die Spannung des Endlosträgers konstant gehalten werden. Darüber hinaus dient die Tänzersteuerung 32 als Puffer, falls Störungen während der Personalisierung auftreten. Auch im Falle eines Bandwechsels, das heißt wenn eine neue Rolle mit zu personalisierenden Datenträgern bereitgestellt wird, dient die Tänzersteuerung 32 als Puffer, so dass die Verarbeitung der kartenförmigen Datenträger kontinuierlich weiterlaufen kann. Die Tänzersteuerung 32 weist in diesem Ausführungsbeispiel sechs Rollen auf, wobei die Anzahl der Rollen variieren kann.

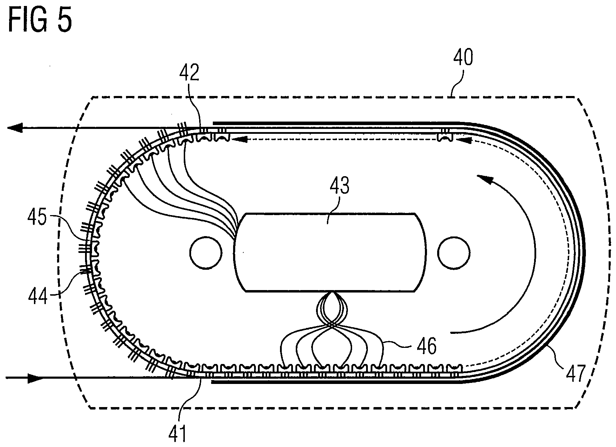

Der Endlosträger mit den zu personalisierenden Datenträgern durchläuft als nächstes eine Personalisierungseinrichtung 40, welche in Figur 5 schematisch in weiterem Detail dargestellt ist. Der Endlosträger erreicht die Personalisierungseinrichtung 40 an einer Eintrittsposition 41 und verlässt die Personalisierungseinrichtung 40 an einer Austrittsposition 42. Während der Transportbewegung von Position 41 bis Position 42 erfolgt die Übertragung der Personalisierungsdaten auf die kartenförmigen Datenträger. Dazu werden die Datenträger von Schnittstellen 44 kontaktiert. Die Schnittstellen 44 sind auf einer Endlosschleife 45 in Form einer Kette oder eines Bandes angeordnet, welche entlang des Umfangs der Personalisierungseinrichtung 40 verläuft. Die Kommunikation der Schnittstellen 44 mit den kartenförmigen Datenträgern kann dabei kontaktbehaftet oder kontaktlos erfolgen.

Die Schnittstellen 44 sind über Verbindungsleitungen 46 mit einer Anschlusseinrichtung 43 verbunden. Die Anschlusseinrichtung 43 bezieht die Personalisierungsdaten von einer nicht dargestellten Datenquelle, beispielsweise einem zentralen Verwaltungssystem, einem Host-Computer oder dergleichen. Die Anschlusseinrichtung 43 übernimmt auch die Ansteuerung der Schnittstellen 44.

Die Kette 45 mit den darauf angeordneten Schnittstellen 44 bewegt sich mit der gleichen Umlaufgeschwindigkeit wie der an der Personalisierungseinrichtung 40 entlang transportierte Endlosträger. Auf diese Weise können die Personalisierungsdaten während der Transportbewegung auf die kartenförmigen Datenträger übertragen werden. Die Dauer, welche für den Transport des Trägerbandes entlang des Umfangs der Personalisierungseinrichtung 40 von der Eintrittsposition 41 bis zur Austrittsposition 42 benötigt wird, ist ausreichend um die Personalisierungsdaten auf einen Datenträger zu übertragen.

Eine Führung 47 sorgt für einen korrekten Verlauf des Endlosträgers entlang der Personalisierungseinrichtung 40. Die Führung 47 kann im Falle einer kontaktlosen Übertragung der Personalisierungsdaten auch als Abschirmung dienen.

Um die Drehbewegung der Kette 45 von der Anschlusseinrichtung 43 zu entkoppeln, können die Verbindungsleitungen 46 beispielsweise über Schleifkontakte mit der Anschlusseinrichtung 43 verbunden sein. Bevorzugt ist es jedoch, dass sich die Anschlusseinrichtung 43 in der gleichen Richtung wie die Kette 45 dreht und die Personalisierungsdaten von der nicht dargestellten Datenquelle kontaktlos, z.B. über einen Optokoppler bezieht, während die Schnittstellen 44 über die Verbindungsleitungen 46 fest mit der Anschlusseinrichtung 43 verdrahtet sind.

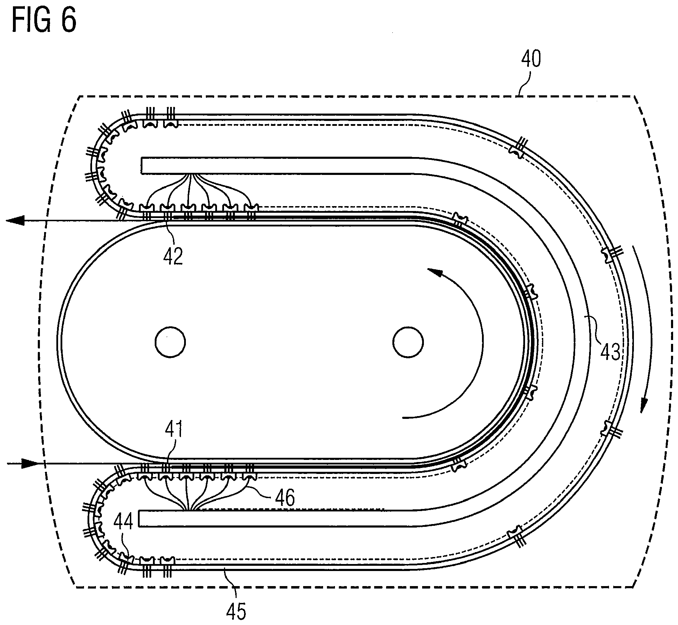

Bevorzugt ist die Kette 45 mit den Schnittstellen 44, wie in Figur 5 dargestellt, innerhalb des Trägerbandes geführt. Alternativ kann, wie in Figur 6 dargestellt, die Kette 45 mit den Schnittstellen 44 auch außerhalb des Trägerbandes verlaufen. Die Schnittstellen 44 stehen hier ebenfalls von der Eintrittsposition 41 bis zur Austrittsposition 42 mit den kartenförmigen Datenträgern in Kommunikationsverbindung, um die Personalisierungsdaten übertragen zu können.

Um kartenförmige Datenträger unterschiedlicher Größen bearbeiten zu können, werden Ketten 45 mit unterschiedlicher Teilung, das heißt unterschiedlichem Abstand zwischen den einzelnen Schnittstellen 44, verwendet. Dies ermöglicht eine hohe Flexibilität bei der Verarbeitung von kartenförmigen Datenträgern unterschiedlichen Formats, indem lediglich die Kette 45 ausgetauscht zu werden braucht.

In den Figuren 4 bis 6 sind die Kette 45 und das Trägerband so dargestellt, daß diese senkrecht zur Blattebene stehen. Es ist aber auch möglich, daß die Kette 45 und das Trägerband in jedem anderen geeigneten Winkel zur Blattebene angeordnet sind. Das bedeutet, daß beispielsweise die Kette 45 auch horizontal zur Blattebene angeordnet werden kann und somit das Trägerband für die Karten auf der Kette 45 liegen würde. Entsprechendes gilt für alle anderen Einrichtungen der vorliegenden Vorrichtung zur Personalisierung von kartenförmigen Datenträgern.

Nach der elektrischen Personalisierung in der Personalisierungseinrichtung 40 kann für Karten mit Magnetstreifen ein Magnetstreifen-Kodier-Modul vorgesehen werden, welches nicht dargestellt ist. Das Magnetstreifen-Kodier-Modul kann alternativ auch in die Personalisierungseinrichtung 40 integriert werden. Damit ließe sich der Magnetstreifen mit entsprechenden Daten beschreiben. Prinzipiell ist eine bestimmte Position innerhalb der Prozesskette für das Magnetstreifen-Kodier-Modul nicht erforderlich, somit kann es an beliebiger Stelle in der Prozesskette angeordnet sein.

Wie in Figur 4 dargestellt, passiert der Endlosträger mit den darauf in Transportrichtung hintereinander angeordneten Datenträgern nach der Übertragung der Personalisierungsdaten eine Einrichtung 50 zur Nachproduktion fehlerhafter Datenträger. In Transportrichtung vor und nach der Einrichtung 50 zur Nachproduktion fehlerhafter Datenträger sind wiederum Tänzersteuerungen 33, 34 angeordnet, welche eine konstante Bandspannung gewährleisten. Die Tänzersteuerungen 33, 34 dienen, wie die Tänzersteuerung 32, als Puffer im Falle von Störungen während der Personalisierung. Die Kapazität der Pufferwirkung der Tänzersteuerungen 33,34 ist so auf die Prozessgeschwindigkeit abgestimmt, dass ein kontinuierlicher Lauf gewährleistet ist.

In der Tänzersteuerung 33 kann mittels einer Rolle 36 das Trägerband festgeklemmt werden, so dass auch ein Transport entgegen der eigentlichen Transportrichtung von der Einrichtung 50 zur Nachproduktion der fehlerhaften Datenträger aus erfolgen kann. Dies kann notwendig werden, um einen nachproduzierten Datenträger an die Stelle des fehlerhaften Datenträgers einsetzen zu können.

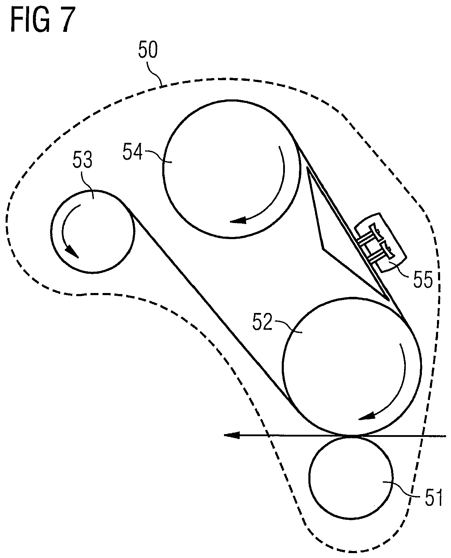

Die Einrichtung 50 zur Nachproduktion fehlerhafter Datenträger ist näher in Figur 7 dargestellt. Mittels der Einrichtung 50 können als defekt oder fehlerhaft erkannte Datenträger aus dem Endlosträger entfernt werden. Die Erkennung von Fehlern erfolgt bereits in der Personalisierungseinrichtung 40. Ein Fehler kann beispielsweise in der Übertragung der Personalisierungsdaten liegen oder aber auch ein Defekt der Speichereinrichtung sein. Mittels der Rolle 51 werden fehlerhafte Datenträger aus dem Trägerband herausgetrennt, beispielsweise ausgestanzt. Da die Position des fehlerhaften Datenträgers bereits in der Personalisierungseinrichtung 40 erkannt wurde, kann die Nachproduktion eines Ersatzdatenträgers bereits zu einem frühen Zeitpunkt beginnen, um einen Austausch ohne große Verzögerung des Prozesses vornehmen zu können. Ersatzdatenträger werden auf der Rolle 54 bereitgestellt und über eine Schnittstelle 55 mit den korrekten Personalisierungsdaten personalisiert. Dies kann wiederum kontaktbehaftet oder kontaktlos erfolgen. Der nachproduzierte Datenträger wird über die Rolle 52 an derjenigen Stelle dem Trägerband zugeführt, an welcher zuvor der fehlerhafte Datenträger herausgetrennt und in Richtung der Rolle 53 abtransportiert wurde. Eine eventuelle Verlangsamung des Prozesses kann mit Hilfe der in Figur 4 dargestellten Tänzereinrichtungen 33, 34 ausgeglichen werden.

In Figur 4 ist weiter nach der elektronischen Personalisierung eine Einrichtung 60 zur optischen Personalisierung dargestellt. Hier können beispielsweise mittels Laser oder Tintenstrahl auf beiden Seiten eines kartenförmigen Datenträgers, das heißt auf der Vorder- und/oder Rückseite, für das menschliche Auge wahrnehmbare Informationen aufgebracht werden. Die optischen Personalisierungsdaten können auch in anderen Druckverfahren, beispielsweise im Digitaldruck oder im Tampondruck aufgebracht werden. Sie stehen üblicherweise mit den elektronischen Personalisierungsdaten in einem überprüfbaren Zusammenhang.

Die beidseitige optische Personalisierung eines Datenträgers kann auch mittels einer Personalisierungseinheit erfolgen, welche nur auf einer Seite des Trägerbandes angeordnet ist. Dazu ist ein Wenden des Trägerbandes notwendig. Falls die optische Personalisierungseinheit über- oder unterhalb des Trägerbandes angeordnet ist, muss das Trägerband um 180 Grad gewendet werden. Vorstellbar ist auch eine seitliche Positionierung der optischen Personalisierungseinheit, so dass das Trägerband lediglich um 90 Grad in die eine und die andere Richtung gewendet werden muss.

Nach der optischen Personalisierung mittels der Einrichtung 60 erfolgt eine optische Prüfung beispielsweise mittels einer Kamera 61. Hierbei werden die Datenträger auf der Vorder- und/ oder Rückseite optisch inspiziert. An dieser Stelle kann auch ein Barcodescanner eingesetzt werden. Bei der optischen Prüfung erfolgt ein Abgleich zwischen den aufzubringenden Personalisierungsinformationen und der tatsächlich durchgeführten, optischen Personalisierung.

Optional kann der optischen Prüfung eine Einheit (nicht dargestellt) beispielsweise nachgeordnet sein, um so genannte scratch label auf die Datenträger aufbringen zu können. Solche Label oder Etiketten können beispielsweise bei der Personalisierung von Karten im ID1-Format als Abdeckung einer aufgebrachten PIN, PUK oder einer anderen Information dienen, wobei das Label später abgekratzt oder weggerubbelt werden kann. Anschließend an eine solche Einrichtung zum Aufbringen eines scratch labels kann eine weitere (ebenfalls nicht dargestellte) Einrichtung zur optischen Inspektion der aufgebrachten Label vorgesehen sein.

Anschließend werden die Datenträger einer elektrischen Überprüfung mittels einer Prüfeinrichtung 70 unterzogen. Die Prüfeinrichtung 70 ist lediglich schematisch dargestellt, weist jedoch prinzipiell einen analogen Aufbau zu der Personalisierungseinheit 40 auf. Das heißt, es sind beispielsweise Schnittstellen vorgesehen, welche sich mit der gleichen Geschwindigkeit wie der Endlosträger bewegen. In der Prüfeinrichtung 70 werden die zuvor mittels der Personalisierungseinheit 40 auf den Datenträger übertragenen Personalisierungsdaten ausgelesen und mit den auf den Datenträger aufgebrachten visuell erkennbaren Personalisierungsinformationen verglichen. Hierbei erfolgt eine Prüfung auf Konsistenz und Plausibilität. Falls die elektrischen und optischen Daten nicht plausibel sind, d.h. nicht oder zumindest teilweise nicht übereinstimmen, werden die entsprechenden Datenträger aussortiert.

Nach der Prüfung auf Plausibilität mittels der Prüfeinrichtung 70 können in einer Vereinzelungseinheit 80 die personalisierten kartenförmigen Datenträger aus dem Trägerband herausgetrennt, beispielsweise mittels einer Stanze 81 ausgestanzt werden. Die ausgestanzten Datenträger werden in einem Behälter 82 aufgefangen, welcher an die Größe der jeweiligen Datenträger angepasst ist.

Es können auch zwei verfahrbare Behälter vorgesehen werden, wobei ein Behälter die korrekt personalisierten Datenträger auffängt und der andere Behälter defekte oder fehlerhaft personalisierte Datenträger auffangen kann. Dabei kann ebenfalls eine Zählung der Gut- und Schlechtteile erfolgen. In der Vereinzelungseinheit 80 kann auch eine Aussortierung der während des Prozesses als schlecht, defekt oder fehlerhaft markierten Datenträger erfolgen.

Ferner kann eine (hier nicht dargestellte) Einrichtung zum Wenden der aus dem Endlosträger herausgetrennten Datenträger vorgesehen sein. Eine solche Einrichtung kann die Datenträger beispielsweise um 180° wenden, bevor diese in dem Behälter 82 abgelegt werden. Dadurch kann erreicht werden, dass die Datenträger in der gewünschten Reihenfolge mit einer bestimmten Orientierung des Stapels vorliegen. Beispielsweise kann so nach dem Herausnehmen des Stapels aus dem Behälter 82 und Umdrehen des Stapels der zuerst abgelegte Datenträger oben auf dem Stapel aufliegen, wobei gleichzeitig die Vorderseiten der Datenträger nach oben zeigen.

Falls kein Heraustrennen der Datenträger aus dem Endlosträger in der Einrichtung 80 erfolgt, kann der Endlosträger mit den personalisierten Datenträgern auch auf einer Rolle 31 aufgewickelt werden, um gelagert und/oder einem weiteren Prozess zugeführt werden zu können. Erfolgte ein Ausstanzen der Datenträger in der Einrichtung 80, werden auf der Rolle 31 lediglich die Reste des Endlosträgers aufgespult.

Durch den Transport der zu personalisierenden, kartenförmigen Datenträger auf dem Endlosträger kann auf die beschriebene Weise eine kontinuierliche Verarbeitung der Datenträger erfolgen. Die Datenträger müssen nicht einzeln gehandhabt werden, so dass hohe Verarbeitungsgeschwindigkeiten verbunden mit einer erheblichen Kosteneinsparung erreicht werden kann. Optische Defekte auf der Oberfläche der Datenträger können vermieden oder zumindest reduziert werden. Ferner lässt diese Vorgehensweise, wie erläutert, eine flexible Handhabung von Datenträgern unterschiedlicher Formate zu.

## Patentansprüche

1. Verfahren zur Personalisierung kartenförmiger Datenträger (10,11, 12), insbesondere von Chipkarten, umfassend die folgenden Schritte:
- Transportieren mindestens eines zu personalisierenden, kartenförmigen Datenträgers (10,11,12) und
- Übertragen von Personalisierungsdaten auf eine elektronische Speichereinrichtung (13) des kartenförmigen Datenträgers (10,11,12) mittels einer Personalisierungseinrichtung (40) während der Transportbewegung,
wobei das Transportieren des kartenförmigen Datenträgers (10,11,12) mittels eines band- oder schlauchförmigen Trägers (20, 21, 22, 23) erfolgt, auf welchem eine Vielzahl von zu personalisierenden, kartenförmigen Datenträgern (10,11,12) in Transportrichtung hintereinander angeordnet ist, **dadurch gekennzeichnet, dass** bei einem fehlerhaften Übertragen von Personalisierungsdaten auf einen der Datenträger (10,11,12) dieser Datenträger (10,11,12) von dem band- oder schlauchförmigen Träger (20, 21, 22, 23) getrennt und durch einen anderen Datenträger (10,11,12) ersetzt wird, auf den die entsprechenden Personalisierungsdaten nach einem Erkennen des fehlerhaften Übertragens der Personalisierungsdaten korrekt übertragen worden sind.

2. Verfahren nach Anspruch 1, **dadurch gekennzeichnet, dass** der kartenförmige Datenträger (10, 11,12) mit einer Schnittstelle (44) der Personalisierungseinrichtung (40) kontaktgebunden oder kontaktlos kommuniziert, welche sich beim Übertragen der Personalisierungsdaten mit der gleichen Geschwindigkeit wie der kartenförmige Datenträger (10,11,12) bewegt.

3. Verfahren nach Anspruch 2, **dadurch gekennzeichnet, dass** sich die Schnittstelle (44) in einer Endlosschleife (45) bewegt und der band- oder schlauchförmige Träger (20, 21, 22, 23) an der Endlosschleife (45) entlang geführt wird, insbesondere um die Endlosschleife (45) herum geführt wird.

4. Verfahren nach einem der Ansprüche 1 bis 3, **dadurch gekennzeichnet, dass** das Übertragen von Personalisierungsdaten auf mehrere der auf dem band- oder schlauchförmigen Träger (20, 21, 22, 23) in Transportrichtung hintereinander angeordneten, kartenförmigen Datenträger (10,11,12) zumindest teilweise gleichzeitig erfolgt.

5. Verfahren nach einem der Ansprüche 1 bis 4, **gekennzeichnet durch** den weiteren Schritt des optischen Personalisierens der kartenförmigen Datenträger (10) **durch** Aufbringen von visuell erkennbaren Personalisierungsinformationen (14) auf die kartenförmigen Datenträger (10).

6. Verfahren nach Anspruch 5, **gekennzeichnet durch** den weiteren Schritt des Vergleichens der auf die kartenförmigen Datenträger (10) übertragenen Personalisierungsdaten mit den auf den kartenförmigen Datenträgern (10) aufgebrachten Personalisierungsinformationen (14) auf Übereinstimmungen.

7. Vorrichtung zur Personalisierung kartenförmiger Datenträger (10,11, 12), umfassend eine Transporteinrichtung zum Transportieren kartenförmiger Datenträger (10,11,12) und eine Personalisierungseinrichtung (40) zum Übertragen von Personalisierungsdaten auf eine elektronische Speichereinrichtung (13) der kartenförmigen Datenträger (10,11,12) während der Transportbewegung, wobei die Transporteinrichtung eingerichtet ist, die kartenförmigen Datenträger (10,11,12) beim Übertragen der Personalisierungsdaten auf einem band- oder schlauchförmigen Träger (20, 21, 22, 23) zu transportieren, auf welchem eine Vielzahl von zu personalisierenden, kartenförmigen Datenträgern (10,11,12) in Transportrichtung hintereinander angeordnet ist, **gekennzeichnet durch** eine Einrichtung (50) zum Nachproduzieren fehlerhaft personalisierter Datenträger (10,11,12), welche eingerichtet ist, einen fehlerhaft personalisierten Datenträger (10, 11, 12) von dem band- oder schlauchförmigen Träger (20, 21, 22, 23) zu trennen und **durch** einen mit den entsprechenden Personalisierungsdaten korrekt personalisierten kartenförmigen Datenträger (10,11,12) zu exsetzen.

8. Vorrichtung nach Anspruch 7, **dadurch gekennzeichnet, dass** die Personalisierungseinrichtung (40) zumindest eine Schnittstelle (44) umfasst, welche eingerichtet ist, mit den kartenförmigen Datenträgern (10,11,12) kontaktgebunden oder kontaktlos zu kommunizieren, und die beim Übertragen der Personalisierungsdaten mit der gleichen Geschwindigkeit wie die kartenförmigen Datenträger (10,11,12) bewegbar ist.

9. Vorrichtung nach Anspruch 8, **dadurch gekennzeichnet, dass** die Schnittstelle (44) in einer Endlosschleife (45) bewegbar und der band- oder schlauchförmige Träger (20, 21, 22, 23) an der Endlosschleife (45) entlang, insbesondere um die Endlosschleife (45) herum, führbar ist.

10. Vorrichtung nach einem der Ansprüche 7 bis 9, **dadurch gekennzeichnet, dass** die Personalisierungseinrichtung (40) mehr als eine Schnittstelle (44) umfasst, welche eingerichtet sind, Personalisierungsdaten auf mehrere der auf dem band- oder schlauchförmigen Träger (20, 21, 22, 23) in Transportrichtung hintereinander angeordneten, kartenförmigen Datenträger (10,11,12) zumindest teilweise gleichzeitig zu übertragen.

11. Vorrichtung nach einem der Ansprüche 8 bis 10, **dadurch gekennzeichnet, dass** die zumindest eine Schnittstelle (44) mit einer Anschlusseinrichtung (43) der Personalisierungseinrichtung (40) über Schleifkontakte verbunden ist, oder dass die zumindest eine Schnittstelle (44) mit der Anschlusseinrichtung (43) fest verbunden ist, wobei die Anschlusseinrichtung (43) in Bewegungsrichtung der zumindest einen Schnittstelle (44) mitdrehbar ist und über eine Kontaktlosschnittstelle die Personalisierungsdaten von einer Datenquelle bezieht.

12. Vorrichtung nach einem der Ansprüche 8 bis 11, **gekennzeichnet durch** eine Einrichtung (60) zum optischen Personalisieren der kartenförmigen Datenträger (10,11,12), welche eingerichtet ist, visuell erkennbare Personalisierungsinformationen (14) auf die kartenförmigen Datenträger (10,11, 12) aufzubringen.

13. Vorrichtung nach Anspruch 12, **gekennzeichnet durch** eine Einrichtung (70) zum Vergleichen der auf die kartenförmigen Datenträger (10,11, 12) übertragenen Personalisierungsdaten mit den auf diesen kartenförmigen Datenträgern (10,11,12) aufgebrachten Personalisierungsinformationen (14) auf Übereinstimmungen.

## Claims

1. A method for personalizing card-shaped data carriers (10, 11, 12), in particular chip cards, comprising the following steps:
- transporting at least one card-shaped data carrier (10, 11, 12) to be personalized, and
- transferring personalization data to an electronic memory device (13) of the card-shaped data carrier (10, 11, 12) by means of a personalization device (40) during the transport motion,
wherein the transporting of the card-shaped data carrier (10, 11, 12) is effected by means of a band-shaped or tubular carrier (20, 21, 22, 23) on which a multiplicity of card-shaped data carriers (10, 11, 12) to be personalized are arranged one behind the other in the transport direction,
**characterized in that** upon a faulty transferring of personalization data to one of the data carriers (10, 11, 12), said data carrier (10, 11, 12) is separated from the band-shaped or tubular carrier (20, 21, 22, 23) and replaced by another data carrier (10, 11, 12) to which the corresponding personalization data have been transferred correctly after a recognizing of the faulty transferring of the personalization data.

2. The method according to claim 1, **characterized in that** the card-shaped data carrier (10, 11, 12) communicates in contact-type or contactless fashion with an interface (44) of the personalization device (40), which moves at the same speed as the card-shaped data carrier (10, 11, 12) upon the transferring of the personalization data.

3. The method according to claim 2, **characterized in that** the interface (44) moves in an endless loop (45) and the band-shaped or tubular carrier (20, 21, 22, 23) is guided along the endless loop (45), in particular guided around the endless loop (45).

4. The method according to any of the claims 1 to 3, **characterized in that** the transferring of personalization data to several of the card-shaped data carriers (10, 11, 12) arranged on the band-shaped or tubular carrier (20, 21, 22, 23) one behind the other in the transport direction is effected at least partly simultaneously.

5. The method according to any of the claims 1 to 4, **characterized by** the further step of optically personalizing the card-shaped data carriers (10) by applying visually recognizable personalization information (14) to the card-shaped data carriers (10).

6. The method according to claim 5, **characterized by** the further step of comparing for matches the personalization data transferred to the card-shaped data carriers (10) with the personalization information (14) applied to the card-shaped data carriers (10).

7. An apparatus for personalizing card-shaped data carriers (10, 11, 12), comprising a transport device for transporting card-shaped data carriers (10, 11, 12) and a personalization device (40) for transferring personalization data to an electronic memory device (13) of the card-shaped data carriers (10, 11, 12) during the transport motion, wherein the transport device is adapted to transport the card-shaped data carriers (10, 11, 12), upon the transferring of the personalization data, on a band-shaped or tubular carrier (20, 21, 22, 23) on which a multiplicity of card-shaped data carriers (10, 11, 12) to be personalized are arranged one behind the other in the transport direction, **characterized by** a device (50) for re-producing faultily personalized data carriers (10, 11, 12) which is adapted to separate a faultily personalized data carrier (10, 11, 12) from the band-shaped or tubular carrier (20, 21, 22, 23) and to replace it by a card-shaped data carrier (10, 11, 12) correctly personalized with the corresponding personalization data.

8. The apparatus according to claim 7, **characterized in that** the personalization device (40) comprises at least one interface (44) which is adapted to communicate with the card-shaped data carriers (10, 11, 12) in contact-type or contactless fashion, and which is movable at the same speed as the card-shaped data carriers (10, 11, 12) upon the transferring of the personalization data.

9. The apparatus according to claim 8, **characterized in that** the interface (44) is movable in an endless loop (45) and the band-shaped or tubular carrier (20, 21, 22, 23) is guidable along the endless loop (45), in particular around the endless loop (45).

10. The apparatus according to any of the claims 7 to 9, **characterized in that** the personalization device (40) comprises more than one interface (44) which are adapted to transfer personalization data at least partly simultaneously to several of the card-shaped data carriers (10, 11, 12) arranged on the band-shaped or tubular carrier (20, 21, 22, 23) one behind the other in the transport direction.

11. The apparatus according to any of the claims 8 to 10, **characterized in that** the at least one interface (44) is connected to a terminal device (43) of the personalization device (40) via sliding contacts, or that the at least one interface (44) is firmly connected to the terminal device (43), wherein the terminal device (43) is co-rotatable in the moving direction of the at least one interface (44) and draws the personalization data from a data source via a contactless interface.

12. The apparatus according to any of the claims 8 to 11, **characterized by** a device (60) for optically personalizing the card-shaped data carriers (10, 11, 12) which is adapted to apply visually recognizable personalization information (14) to the card-shaped data carriers (10, 11, 12).

13. The apparatus according to claim 12, **characterized by** a device (70) for comparing for matches the personalization data transferred to the card-shaped data carriers (10, 11, 12) with the personalization information (14) applied to said card-shaped data carriers (10, 11, 12).

## Revendications

1. Procédé de personnalisation de supports de données (10, 11, 12) en forme de carte, en particulier de cartes à puces, comprenant les étapes suivantes :
- transport d'au moins un support de données (10, 11, 12) en forme de carte à personnaliser et
- transfert de données de personnalisation sur un équipement électronique de mémorisation (13) du support de données (10, 11, 12) en forme de carte au moyen d'un équipement de personnalisation (40) pendant le déplacement de transport,
le transport du support de données (10, 11, 12) en forme de carte ayant lieu au moyen d'un support (20, 21, 22, 23) en forme de bande ou de tube sur lequel une pluralité de supports de données (10, 11, 12) en forme de carte à personnaliser sont agencés les uns derrière les autres dans la direction du transport, **caractérisé en ce que,** dans le cas d'un transfert erroné de données de personnalisation sur un des supports de données (10, 11, 12), ce support de données (10, 11, 12) est séparé du support (20, 21, 22, 23) en forme de bande ou de tube et remplacé par un autre support de données (10, 11, 12) sur lequel les données de personnalisation correspondantes ont été, après une reconnaissance du transfert erroné de données de personnalisation, correctement transférées.

2. Procédé selon la revendication 1, **caractérisé en ce que** le support de données (10, 11, 12) en forme de carte communique avec ou sans contact avec une interface (44) de l'équipement de personnalisation (40), laquelle se déplace, lors du transfert des données de personnalisation, à la même vitesse que le support de données (10, 11, 12) en forme de carte.

3. Procédé selon la revendication 2, **caractérisé en ce que** l'interface (44) se déplace en une boucle sans fin (45) et **en ce que** le support (20, 21, 22, 23) en forme de bande ou de tube est guidé le long de la boucle sans fin (45), en particulier autour de la boucle sans fin (45).

4. Procédé selon une des revendications de 1 à 3, **caractérisé en ce que** le transfert de données de personnalisation sur plusieurs des supports de données (10, 11, 12) en forme de carte agencés sur le support (20, 21, 22, 23) en forme de bande ou de tube les uns derrière les autres dans la direction du transport a lieu au moins partiellement simultanément.

5. Procédé selon une des revendications de 1 à 4, **caractérisé par** l'étape supplémentaire de la personnalisation optique du support de données (10) en forme de carte par application d'informations de personnalisation (14) visuellement reconnaissables sur le support de données (10) en forme de carte.

6. Procédé selon la revendication 5, **caractérisé par** l'étape supplémentaire de la comparaison des données de personnalisation transférées sur les supports de données (10) en forme de carte avec les informations de personnalisation (14) appliquées sur les supports de données (10) en forme de carte afin de déterminer des concordances.

7. Dispositif de personnalisation de supports de données (10, 11, 12) en forme de carte, comprenant un équipement de transport pour le transport de supports de données (10, 11, 12) en forme de carte et un équipement de personnalisation (40) pour le transfert de données de personnalisation sur un équipement électronique de mémorisation (13) du support de données (10, 11, 12) en forme de carte pendant le déplacement de transport, l'équipement de transport étant conçu pour transporter, lors du transfert de données de personnalisation, les supports de données (10, 11, 12) en forme de carte sur un support (20, 21, 22, 23) en forme de bande ou de tube sur lequel une pluralité de supports de données (10, 11, 12) en forme de carte à personnaliser sont agencés les uns derrière les autres dans la direction du transport, **caractérisé par** un équipement (50) qui est destiné à la production de remplacement de supports de données (10, 11, 12) personnalisés de manière erronée et qui conçu pour séparer du support (20, 21, 22, 23) en forme de bande ou de tube un support de données (10, 11, 12) personnalisé de manière erronée et pour le remplacer par un support de données (10, 11, 12) en forme de carte correctement personnalisé avec les données de personnalisation correspondantes.

8. Dispositif selon la revendication 7, **caractérisé en ce que** l'équipement de personnalisation comprend (40) au moins une interface (44) qui est conçue pour communiquer avec ou sans contact avec les support de données (10, 11, 12) en forme de carte et qui, lors du transfert des données de personnalisation, peut être déplacée à la même vitesse que les supports de données (10, 11, 12) en forme de carte.

9. Dispositif selon la revendication 8, **caractérisé en ce que** l'interface (44) peut être déplacée en une boucle sans fin (45) et **en ce que** le support (20, 21, 22, 23) en forme de bande ou de tube peut être guidé le long de la boucle sans fin (45), en particulier autour de la boucle sans fin (45).

10. Dispositif selon une des revendications de 7 à 9, **caractérisé en ce que** l'équipement de personnalisation (40) comprend plus d'une interface (44) qui sont conçues pour transférer au moins partiellement simultanément des données de personnalisation sur plusieurs des supports de données (10, 11, 12) en forme de carte agencés les uns derrière les autres dans la direction du transport sur le support (20, 21, 22, 23) en forme de bande ou de tube.

11. Dispositif selon une des revendications de 8 à 10, **caractérisé en ce que** la au moins une interface (44) est reliée par l'intermédiaire de contacts glissants avec un équipement de connexion (43) de l'équipement de personnalisation (40), ou **en ce que** la au moins une interface (44) est reliée à demeure avec l'équipement de connexion (43), l'équipement de connexion (43) pouvant être entraîné en co-rotation dans la direction du déplacement de la au moins une interface (44) et obtenant de la part d'une source de données, par l'intermédiaire d'une interface sans contact, les données de personnalisation,

12. Dispositif selon une des revendications de 8 à 11, **caractérisé par** un équipement (60) qui est destiné à la personnalisation optique des supports de données (10, 11, 12) en forme de carte et qui est conçu pour appliquer des informations de personnalisation (14) visuellement reconnaissables sur les supports de données (10, 11, 12) en forme de carte.

13. Dispositif selon la revendication 12, **caractérisé par** un équipement (70) qui est destiné à la comparaison des données de personnalisation transférées sur les supports de données (10, 11, 12) en forme de carte avec les informations de personnalisation (14) appliquées sur ces supports de données (10, 11, 12) en forme de carte pour déterminer des concordances.
